# EUROPÄISCHE PATENTSCHRIFT

(11) **EP 1 722 956 B1**
(45) Veröffentlichungstag und Bekanntmachung des Hinweises auf die Patenterteilung: **03.07.2013**
(21) Anmeldenummer: 05715499.9
(22) Anmeldetag: 22.02.2005
(51) Int. Cl.: B29C 47/90, B29L 7/00

(54) **BLASFOLIENEXTRUSIONSANLAGE**
BLOWN FILM EXTRUSION SYSTEM
SYSTEME D'EXTRUSION POUR FEUILLE SOUFFLEE

(30) Priorität: 04.03.2004 DE 102004011216; 25.03.2004 DE 102004031366
(43) Veröffentlichungstag der Anmeldung: 22.11.2006
(73) Patentinhaber: Windmöller & Hölscher KG, 49525 Lengerich (DE)
(72) Erfinder: LINKIES, Jürgen, 49536 Lienen (DE); KNOKE, Thomas, 33619 Bielefeld (DE); BACKMANN, Martin, 49525 Lengerich (DE); FRISCHE, Holger, 49205 Hasbergen (DE)
(86) Internationale Anmeldenummer: PCT/EP2005/001923
(87) Internationale Veröffentlichungsnummer: WO 2005/084919

(56) Entgegenhaltungen:
- EP-A- 1 488 910
- WO-A-03/033241
- DE-A1- 2 312 123
- US-A- 3 321 563
- US-A- 5 128 076

## Beschreibung

Die Erfindung betrifft eine Blasfolienextrusionsanlage gemäß dem Oberbegriff des Anspruchs 1.

Solche Blasfolienextrusionsanlagen sind bekannt und stehen bereits seit langer Zeit im Einsatz. Solchen Anlagen werden Kunststoffe in granulierter Form zugeführt, die dann in Extrudern unter hoher Druckeinwirkung zu einer viskosen Masse plastifiziert werden. Diese Masse, die aufgrund des Drucks eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Dieser Folienschlauch kann jedoch, da er noch nicht vollständig abgekühlt ist, in seinem Durchmesser verändert werden. In der Regel wird der Durchmesser vergrößert, indem in den Innenraum des Folienschlauches Druckluft eingeblasen wird. Damit der Folienschlauch immer einen konstanten Durchmesser aufweist, wird er auf Abstand zu oder direkt entlang von Folienführungselementen geführt. Diese Anordnung der Folienführungselemente wird auf dem Gebiet der Blasfolienextrusionsanlagen als Kalibrierkorb bezeichnet. Nach dem Durchlaufen des Kalibrierkorbs wird der Folienschlauch, der sich nun verfestigt hat, entlang weiterer Folienführungselemente geführt, die den Schlauch flachlegen. Diese Flachlegeeinheit führt den Folienschlauch einer Abquetschung zu, so dass dieser eine doppellagige Folienbahn bildet. Unter "Abquetschung" ist neben dem vollständigen Flachlegen des Folienschlauches auch ein nicht vollständiges Flachlegen zu verstehen. Dem nicht vollständigen Flachlegen können noch Bearbeitungsschritte, wie beispielsweise das Längsschneiden entlang der Falzkanten, folgen.

Die Folienführungselemente können mit Bohrungen durchsetzt sein, die auf der dem Folienschlauch abgewandten Seite mit Druckluft beaufschlagt werden. Die durch die Bohrungen, welche beispielsweise Durchmesser von 0,5 mm aufweisen, hindurch strömende Druckluft hält den Folienschlauch auf Abstand, so dass dieser berührungslos geführt wird. Auf diese Weise werden Beschädigungen des Folienschlauchs vermieden.

Jedoch müssen die Bohrungen, damit die Folienführungselemente ihre Stabilität nicht einbüßen, einen gewissen Abstand voneinander aufweisen. Dies hat jedoch zur Folge, dass das Luftpolster, welches den Folienschlauch führt, nicht gleichmäßig auf den Umfang des Folienschlauches wirkt. Dadurch wird die Führungsgenauigkeit beeinträchtigt. Größere Ungenauigkeiten im Durchmesser des Folienschlauchs sind die Folge. Auch neigt der Folienschlauch aufgrund der ungleichmäßigen Druckluftbeaufschlagung zum Flattern.

Die US 3,321,563 offenbart eine Einrichtung zur Produktion eines hochtransparenten, thermoplastischen Films. Hierzu ist eine Kühlvorrichtung vorgesehen, welche mit Luft oder mit Wasser beaufschlagbar ist, um den noch nicht verfestigten Folienschlauch schnell abkühlen zu können. Zum Durchtritt des Kühlmediums ist eine poröse Wand aus keramischem Material vorgesehen.

Die US 5,128,076 offenbart eine Blasfolienextrusionsanlage mit einem Kalibrierkorb, der innenseitlich eine Hülse umfasst, deren Innenwandung mikroporöses Material umfasst. Dieser Kalibrierkorb hat jedoch einen festen Innendurchmesser.

Die Aufgabe der vorliegenden Erfindung ist es daher, eine Blasfolienextrusionsanlage vorzuschlagen, mit der qualitativ hochwertigere Folienschläuche mit variablen Durchmessern produziert werden können.

Die Aufgabe wird durch die Merkmale des Anspruchs 1 gelöst.

Demnach enthalten die Führungselemente ein poröses, vorzugsweise ein mikroporöses Material. Das Material weist also eine Vielzahl von durchgängigen Poren auf. Daher können die Folienführungselemente auf der dem Folienschlauch abgewandten Seite mit Druckluft beaufschlagt werden, die dann auf der dem Folienschlauch zugewandten Seite ein nahezu gleichmäßiges Luftpolster bildet, mit welchem der Folienschlauch mit hoher Güte geführt werden kann. Der Durchmesser des Folienschlauchs weist in der Folge geringere Toleranzen auf. Weiterhin bewirkt das vergleichmäßigte Luftpolster eine zusätzliche Kühlung der Folie, so dass diese schneller gekühlt werden kann, was sich in einer größeren Transparenz der Folie äußert. Insgesamt kann durch die Verwendung solcher Führungselemente die Qualität der Folie erheblich gesteigert werden.

Als Material, welches diese Eigenschaften besitzt, wird vorzugsweise gesintertes Material eingesetzt. Gesintertes Material lässt sich auf einfache Weise herstellen, da auf eine nachträgliche, mechanische Bearbeitung verzichtet werden kann.

In bevorzugter Ausführung weist das poröse Material metallische Bestandteile wie etwa Kupfer oder Bronze auf. Dies führt zu einer hohen Stabilität des Materials, so dass die Führungselemente relativ dünn gehalten werden können.

In einer vorteilhaften Ausführungsform der erfindungsgemäßen Blasfolienextrusionsanlage ist das poröse Material zwischen dem Transportweg des Folienschlauchs und einem Druckluftreservoir oder einer Druckluftzuleitung derart angeordnet, dass Luft durch das Material entweicht, so dass diese eine Kraft auf die Folie ausübt. Das Material kann dabei als Platten oder Bleche ausgeformt sein, wobei deren Flächen parallel beziehungsweise im Wesentlichen tangential zum Folienschlauch angeordnet sind. Die Platten oder Bleche können zudem leicht gebogen sein. Die Dicke der Platten liegt erfindungsgemäß zwischen 2 und 5 mm. Die mittlere Porengröße des porösen Materials beträgt zwischen 5 und 100, insbesondere zwischen 10 und 60 und bevorzugt zwischen 20 und 45 Mikrometern.

Bei der erfindungsgemäßen Blasfolienextrusionsanlage ist das poröse Material im Bereich des Kalibrierkorbs angeordnet, wobei mehrere vereinzelte Flächen aus porösem Material dem Folienschlauch zugewandt sind. Die Gesamtheit dieser vereinzelten Flächen umschreibt die Außenhülle eines Zylinders, der in seinem Durchmesser variiert werden kann. Auf diese Weise können qualitativ hochwertigere Folienschläuche sogar mit variablen Durchmessern produziert werden. Vorteilhafterweise ist dabei zumindest ein Teil der Flächen in Umfangsrichtung des Folienschlauches gegeneinander verschoben.

Weitere vorteilhafte Ausgestaltungen der Erfindung sind den Unteransprüchen sowie der Zeichnung zu entnehmen. Die einzelnen Figuren zeigen:
- Fig. 1: eine Blasfolienextrusionsanlage gemäß dem Stand der Technik
- Fig. 2: Blaskopf, Kalibrierkorb und Flachlegeeinheit einer erfindungsgemäßen Blasfolienextrusionsanlage
- Fig. 3: Ansicht III-III aus Fig. 2.

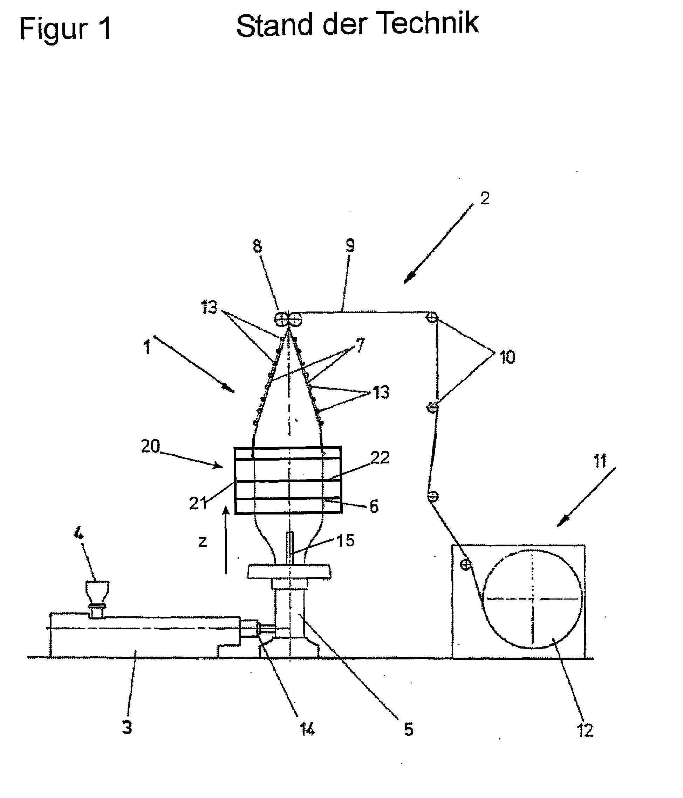

Fig. 1 zeigt eine bekannte Blasfolienextrusionsanlage 1. Dem Einfüllstutzen 4 wird ein Kunststoff zugeführt, der dann in dem Extruder 3 plastifiziert wird. Die entstandene Masse wird über eine Verbindungsleitung 14 dem Blaskopf 5 zugeführt, welche einen Folienschlauch 9 bildet. Dabei verlässt der Folienschlauch 9 den Blaskopf 5 durch eine nicht sichtbare Ringdüse in Transportrichtung z. Aufgrund der Zuführung von Druckluft durch den Gebläsestutzen 12 wird der Folienschlauch unmittelbar nach Verlassen des Blaskopfes 5 aufgeweitet. Der Durchmesser des Folienschlauches 9 wird jedoch durch den Kalibrierkorb 20 begrenzt. Innerhalb des Kalibrierkorbes 20 wird der Folienschlauch 9 von Platten 28 geführt, durch welche Druckluft auf den Folienschlauch gerichtet wird. Der Kalibrierkorb 20 besteht zudem aus einem Rahmen 21 und Querträgern 22 und 6. Nach dem Verlassen des Kalibrierkorbes 20 gelangt der Folienschlauch 9 in eine Flachlegeeinheit 21, in welcher der Folienschlauch nahezu oder vollständig zu einer doppellagigen Folienbahn umgeformt wird. Dabei wird der Folienschlauch 9 zwischen Paaren von Führungselementen 7, 13 geführt, die im Verlauf der Transportrichtung z einen immer geringeren Abstand voneinander einnehmen. Die vollständige Flachlegung erfolgt durch eine Abquetschvorrichtung, die aus einem Paar von Abquetschwalzen 8 besteht. Die Folienbahn 9 kann nun durch eine nicht gezeigte Reversiervorrichtung geführt werden, oder, wie im Falle der gezeigten Vorrichtung, direkt über Umlenkwalzen 10 einer Wickelvorrichtung 11 zugeführt werden, wo die Folienbahn 9 zu einem Wickel 12 verarbeitet wird.

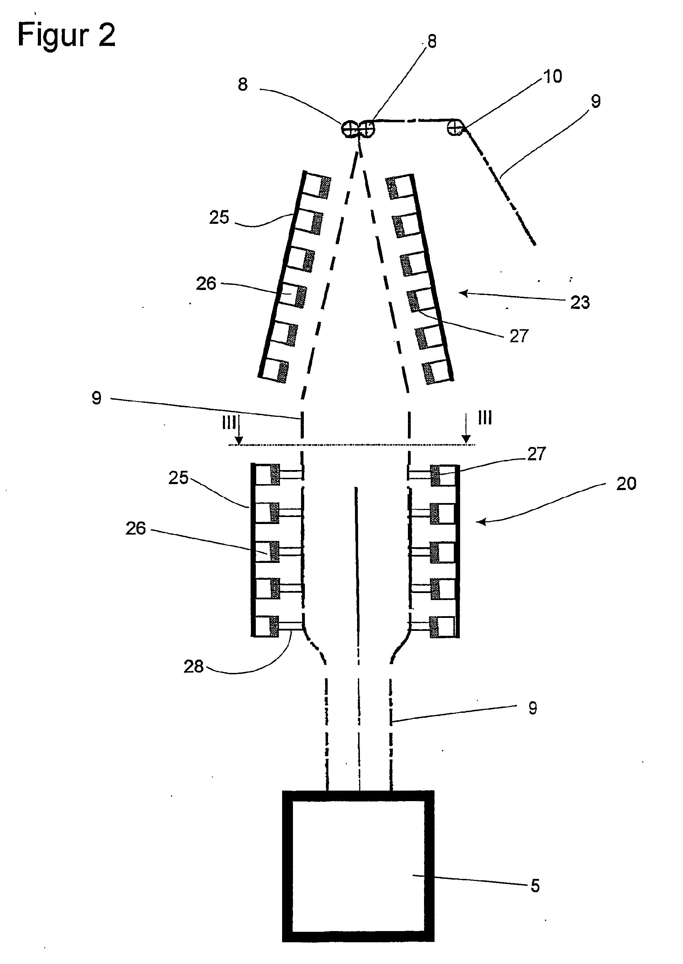

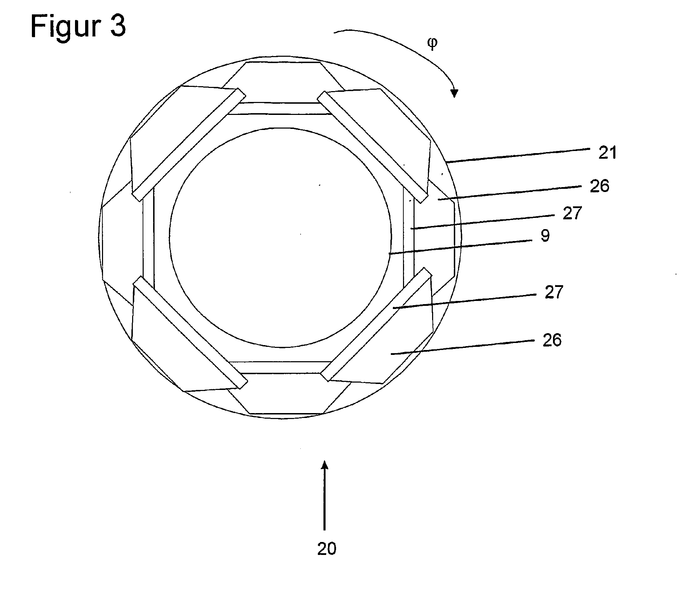

Die Figuren 2 und 3 zeigen Ausschnitte einer erfindungsgemäßen Blasfolienextrusionsanlage 1. Im Bereich des Kalibrierkorbes 20 sind an einem Rahmen 25 mehrere Druckluftreservoire 26 angeordnet. Im Verlaufe der Transportrichtung z sind mehrere Druckluftreservoire 26 übereinander angeordnet. Ähnliche Druckluftreservoire 26 sind im Rahmen 25 der Flachlegeeinheit 21 befestigt, wobei jedoch zu betonen ist, dass in einer erfindungsgemäßen Blasfolienextrusionseinheit 1 auch entweder der Kalibrierkorb 20 oder die Flachlegeeinheit 21 in bekannter Weise ausgestaltet sein können. Die Druckluftreservoire 26 des Kalibierkorbes 20 sind durch nicht gezeigte Stelltriebe relativ zum Folienschlauch in radialer Richtung verschieblich gelagert und definieren auf diese Weise den Durchmesser des Folienschlauches 9. Aus Fig. 3 ist zu erkennen, dass die Druckluftreservoire 26 über den Umfang des Kalibrierkorbes verteilt sind, wobei die auf den verschiedenen Ebenen angeordneten Druckluftreservoire 26 gegeneinander in Umfangsrichtung f des Folienschlauches 9 verschoben sind.

Die Druckluftreservoire 26 werden über nicht dargestellte Druckluftleitungen mit Druckluft versorgt, wobei die Druckluftreservoire 26 der Flachlegeeinheit 21 mit größerem Druck als die Druckluftreservoire des Kalibrierkorbes 20 belegt sein können, da zwecks Verformung die auf den Folienschlauch 9 ausgeübten Kräfte größer sein müssen. Auf der dem Folienschlauch 9 zugewandten Seite sind die Druckluftreservoire 26 durch Platten aus porösem Material 27 verschlossen, durch deren Poren jedoch die Druckluft treten kann. Die Platten aus porösem Material 27 sind so angeordnet, dass die Druckluft eine Kraft auf den Folienschlauch 9 ausübt und diesen auf geringem, aber wohl definiertem Abstand zu den Platten hält. Auf diese Weise wird der Folienschlauch 9 lagegenau geführt.

| **Bezugszeichenliste** | |
|---|---|
| 1 | Blasfolienextrusionsanlage |
| 2 | |
| 3 | Extruder |
| 4 | Einfüllstutzen |
| 5 | Blaskopf |
| 6 | Querträger |
| 7 | Führungselement |
| 8 | Abquetschwalze |
| 9 | Folienschlauch |
| 10 | Umlenkwalzen |
| 11 | Wickelvorrichtung |
| 12 | Wickel |
| 13 | Führungselement |
| 14 | Verbindungsleitung |
| 15 | Gebläsestutzen |
| 16 | |
| 17 | |
| 18 | |
| 19 | |
| 20 | Kalibrierkorb |
| 21 | Flachlegeeinheit |
| 22 | Querträger |
| 23 | |
| 24 | |
| 25 | Rahmen |
| 26 | Druckluftreservoir |
| 27 | Platten aus porösem Material 27 |
| 28 | Platten |
| z | Transportrichtung des Folienschlauches 9 |
| f | Umfangsrichtung des Folienschlauches |

## Patentansprüche

1. Blasfolienextrusionsanlage (1) welche zumindest folgende Merkmale aufweist:
- einen Blaskopf (5), der einen Folienschlauch (9) extrudiert,
- eine Abquetschvorrichtung (8), welche den Folienschlauch (9) abquetscht,
- Folienführungselemente (7, 13, 27, 28), welche (3) den Folienschlauch (9) zwischen seiner Extrusion durch den Blaskopf und seiner Abquetschung führen, wobei die Führungselemente (7, 13, 27, 28) ein poröses Material enthalten,
**dadurch gekennzeichnet,**
● **dass** das poröse Material eine mittlere Porengröße zwischen 5 und 100 Mikrometern aufweist,
● **dass** das poröse Material eine Dicke zwischen 2 und 5 mm aufweist, und
● **dass** das poröse Material im Bereich eines Kalibrierkorbs angeordnet ist, wobei mehrere vereinzelte Flächen (27) aus porösem Material dem Folienschlauch (9) zugewandt sind, wobei die Gesamtheit der vereinzelten Flächen die Außenhülle eines Zylinders umschreibt, der in seinem Durchmesser variiert werden kann.

2. Blasfolienextrusionsanlage (1) nach Anspruch 1,
**dadurch gekennzeichnet, dass**
das poröse Material gesintertes Material ist.

3. Blasfolienextrusionsanlage (1) nach einem der vorstehenden Ansprüche,
**dadurch gekennzeichnet, dass**
das poröse Material metallische Bestandteile wie Kupfer oder Bronze aufweist.

4. Blasfolienextrusionsanlage (1) nach einem der vorstehenden Ansprüche,
**dadurch gekennzeichnet, dass**
das poröse Material zwischen dem Transportweg der Folie und/oder des Folienschlauchs (9) und einem Druckluftreservoir oder einer Luftzuleitung derart angeordnet ist, dass Luft durch das poröse Material entweicht, wobei die ausströmende Luft eine Kraft auf die Folie ausübt.

5. Blasfolienextrusionsanlage (1) nach dem vorstehenden Anspruch,
**dadurch gekennzeichnet, dass**
das poröse Material eine mittlere Porengröße zwischen 10 und 60 Mikrometern aufweist.

6. Blasfolienextrusionsanlage (1) nach dem vorstehenden Anspruch,
**dadurch gekennzeichnet, dass**
das poröse Material eine mittlere Porengröße zwischen 20 und 45 Mikrometern aufweist.

7. Blasfolienextrusionsanlage (1) nach einem der vorstehenden Ansprüche,
**dadurch gekennzeichnet, dass**
zumindest ein Teil der Platten aus porösem Material (27), der in Förderrichtung (z) des Folienschlauchs (9) gegeneinander versetzt ist, auch in Umfangsrichtung (ϕ) des Folienschlauchs (9) gegeneinander verschoben ist.

8. Verfahren zum Betrieb einer Blasfolienextrusionsanlage nach einem der Ansprüche 4 bis 7,
**dadurch gekennzeichnet, dass**
der Druck in dem Luftreservoir (26) und/oder der Luftleitung so eingestellt wird,
dass die Druckdifferenz zwischen dem Luftreservoir und/oder der Luftleitung und der Außenluft zwischen 10 Millibar und 1 Bar liegt.

9. Verfahren zum Betrieb einer Blasfolienextrusionsanlage (1) nach dem vorstehenden Anspruch,
**dadurch gekennzeichnet, dass**
der Druck in dem Luftreservoir (26) und/oder der Luftleitung so eingestellt wird, dass die Druckdifferenz zwischen dem Luftreservoir (26) und/oder der Luftleitung und der Außenluft zwischen 20 und 200 Millibar liegt.

10. Verfahren zum Betrieb einer Blasfolienextrusionsanlage (1) nach dem vorstehenden Anspruch,
**dadurch gekennzeichnet, dass**
der Druck in dem Luftreservoir (26) und/oder der Luftleitung so eingestellt wird, dass die Druckdifferenz zwischen dem Luftreservoir (26) und/oder der Luftleitung und der Außenluft zwischen 10 und 100 Millibar liegt.

11. Verfahren zum Betrieb einer Blasfolienextrusionsanlage nach dem vorstehenden Anspruch,
**dadurch gekennzeichnet, dass**
der Druck in dem Luftreservoir (26) und/oder der Luftleitung so eingestellt wird, dass die Druckdifferenz zwischen dem Luftreservoir (26) und/oder der Luftleitung und der Außenluft zwischen 30 und 90 Millibar liegt.

## Claims

1. Blown film extrusion system (1), which has at least the following features:
- a film blowing die (5), which extrudes a film tube (9),
- a pinch-off device (8), which pinches off the film tube (9),
- film guiding elements (7, 13, 27, 28), which guide the film tube (9) between its extrusion through the film blowing die and its pinching off, the guiding elements (7, 13, 27, 28) containing a porous material,
**characterized**
● **in that** the porous material has an average pore size of between 5 and 100 micrometres,
● **in that** the porous material has a thickness of between 2 and 5 mm, and
● **in that** the porous material is arranged in the region of a calibrating cage, a number of isolated sheets (27) of porous material facing the film tube (9), the isolated sheets altogether circumscribing the outer envelope of a cylinder that can be varied in its diameter.

2. Blown film extrusion system (1) according to Claim 1, **characterized in that** the porous material is sintered material.

3. Blown film extrusion system (1) according to one of the preceding claims, **characterized in that** the porous material has metallic constituents such as copper or bronze.

4. Blown film extrusion system (1) according to one of the preceding claims, **characterized in that** the porous material is arranged between the transporting path of the film and/or the film tube (9) and a compressed-air reservoir or an air supply line in such a way that air escapes through the porous material, the air that flows out exerting a force on the film.

5. Blown film extrusion system (1) according to the preceding claim, **characterized in that** the porous material has an average pore size of between 10 and 60 micrometres.

6. Blown film extrusion system (1) according to the preceding claim, **characterized in that** the porous material has an average pore size of between 20 and 45 micrometres.

7. Blown film extrusion system (1) according to one of the preceding claims, **characterized in that** at least some of the sheets of porous material (27) that are offset with respect to one another in the conveying direction (z) of the film tube (9) are also displaced with respect to one another in the circumferential direction (ϕ) of the film tube (9).

8. Method for operating a blown film extrusion system according to one of Claims 4 to 7, **characterized in that** the pressure in the air reservoir (26) and/or the air line is set such that the pressure difference between the air reservoir and/or the air line and the outside air lies between 10 millibars and 1 bar.

9. Method for operating a blown film extrusion system (1) according to the preceding claim, **characterized in that** the pressure in the air reservoir (26) and/or the air line is set such that the pressure difference between the air reservoir (26) and/or the air line and the outside air lies between 20 and 200 millibars.

10. Method for operating a blown film extrusion system (1) according to the preceding claim, **characterized in that** the pressure in the air reservoir (26) and/or the air line is set such that the pressure difference between the air reservoir (26) and/or the air line and the outside air lies between 10 and 100 millibars.

11. Method for operating a blown film extrusion system according to the preceding claim, **characterized in that** the pressure in the air reservoir (26) and/or the air line is set such that the pressure difference between the air reservoir (26) and/or the air line and the outside air lies between 30 and 90 millibars.

## Revendications

1. Système d'extrusion pour feuille soufflée (1), qui présente au moins les caractéristiques suivantes:
- une tête de soufflage (5), qui extrude une gaine en feuille (9),
- un dispositif d'écrasement (8), qui écrase la gaine en feuille (9),
- des éléments de guidage de feuille (7, 13, 27, 28), qui guident la gaine en feuille (9) entre son extrusion à travers la tête de soufflage et son écrasement, dans lequel les éléments de guidage de feuille (7, 13, 27, 28) contiennent un matériau poreux,
**caractérisé en ce que**
- le matériau poreux présente une taille de pore moyenne comprise entre 5 et 100 micromètres,
- le matériau poreux présente une épaisseur comprise entre 2 et 5 mm, et
- le matériau poreux est disposé dans la région d'un panier de calibrage, dans lequel plusieurs faces individuelles (27) en matériau poreux sont tournées vers la gaine en feuille (9), dans lequel la totalité des faces individuelles décrivent l'enveloppe extérieure d'un cylindre, dont le diamètre peut varier.

2. Système d'extrusion pour feuille soufflée (1) selon la revendication 1, **caractérisé en ce que** le matériau poreux est un matériau fritté.

3. Système d'extrusion pour feuille soufflée (1) selon l'une quelconque des revendications précédentes, **caractérisé en ce que** le matériau poreux présente des composants métalliques comme le cuivre ou le bronze.

4. Système d'extrusion pour feuille soufflée (1) selon l'une quelconque des revendications précédentes, **caractérisé en ce que** le matériau poreux est disposé entre le chemin de transport de la feuille et/ou de la gaine en feuille (9) et un réservoir d'air comprimé ou une conduite d'arrivée d'air, de telle manière que de l'air s'échappe à travers le matériau poreux, dans lequel l'air sortant exerce une force sur la feuille.

5. Système d'extrusion pour feuille soufflée (1) selon la revendication précédente, **caractérisé en ce que** le matériau poreux présente une taille de pores moyenne comprise entre 10 et 60 micromètres.

6. Système d'extrusion pour feuille soufflée (1) selon la revendication précédente, **caractérisé en ce que** le matériau poreux présente une taille de pores moyenne comprise entre 20 et 45 micromètres.

7. Système d'extrusion pour feuille soufflée (1) selon l'une quelconque des revendications précédentes, **caractérisé en ce qu'**au moins une partie des plaques en matériau poreux (27), qui sont décalées l'une par rapport à l'autre dans la direction de transport (z) de la gaine en feuille (9), sont également décalées l'une par rapports à l'autre dans la direction périphérique (f) de la gaine en feuille (9).

8. Procédé de conduite d'un système d'extrusion pour feuille soufflée selon l'une quelconque des revendications 4 à 7, **caractérisé en ce que** l'on règle la pression dans le réservoir d'air (26) et/ou dans la conduite d'air de telle manière que la différence de pression entre le réservoir d'air et/ou la conduite d'air et l'air extérieur se situe entre 10 millibars et 1 bar.

9. Procédé de conduite d'un système d'extrusion pour feuille soufflée (1) selon la revendication précédente, **caractérisé en ce que** l'on règle la pression dans le réservoir d'air (26) et/ou dans la conduite d'air de telle manière que la différence de pression entre le réservoir d'air (26) et/ou la conduite d'air et l'air extérieur se situe entre 20 et 200 millibars.

10. Procédé de conduite d'un système d'extrusion pour feuille soufflée (1) selon la revendication précédente, **caractérisé en ce que** l'on règle la pression dans le réservoir d'air (26) et/ou dans la conduite d'air de telle manière que la différence de pression entre le réservoir d'air (26) et/ou la conduite d'air et l'air extérieur se situe entre 10 et 100 millibars.

11. Procédé de conduite d'un système d'extrusion pour feuille soufflée selon la revendication précédente, **caractérisé en ce que** l'on règle la pression dans le réservoir d'air (26) et/ou dans la conduite d'air de telle manière que la différence de pression entre le réservoir d'air (26) et/ou la conduite d'air et l'air extérieur se situe entre 30 et 90 millibars.
